# EUROPÄISCHE PATENTSCHRIFT

(11) **EP 3 151 492 B1**
(45) Veröffentlichungstag und Bekanntmachung des Hinweises auf die Patenterteilung: **06.06.2018**
(21) Anmeldenummer: 16191509.5
(22) Anmeldetag: 29.09.2016
(51) Int. Cl.: H04L 12/931, H04L 12/40, H04L 12/853, H04L 29/06, H04L 29/12, H04L 29/08

(54) **VERFAHREN ZUR DATENKOMMUNIKATION MIT REDUZIERTEM OVERHEAD IN EINEM ECHTZEITFÄHIGEN ETHERNET-DATENNETZWERK**
METHOD FOR DATA COMMUNICATION WITH REDUCED OVERHEAD IN A REAL-TIME ETHERNET DATA NETWORK
PROCÉDÉ DE COMMUNICATION DE DONNÉES AVEC UN SURDÉBIT RÉDUIT DANS UN RÉSEAU DE DONNÉES ETHERNET EN TEMPS RÉEL

(30) Priorität: 01.10.2015 AT 508332015
(43) Veröffentlichungstag der Anmeldung: 05.04.2017
(73) Patentinhaber: B&R Industrial Automation GmbH, 5142 Eggelsberg (AT)
(72) Erfinder: Bruckner, Dietmar, 5102 Anthering (AT)
(74) Vertreter: Patentanwälte Pinter & Weiss OG

(56) Entgegenhaltungen:
- DE-A1-102008 018 633
- Luca Lachello ET AL: "Systemvergleich: Die 5 wesentlichen Systeme", Industrial Ethernet Facts, 28. Februar 2013 (2013-02-28), Seiten 1-36, XP055352488, Gefunden im Internet: URL:http://www.ethernet-powerlink.org/en/d ownloads/industrial-ethernet-facts/action/ open-download/download/industrial-ethernet -facts-2nd-edition-german/ [gefunden am 2017-03-07]

## Beschreibung

Die gegenständliche Erfindung betrifft ein Verfahren zur Datenkommunikation in einem echtzeitfähigen Ethernet-Datennetzwerk, in dem zumindest ein Master über das Ethernet-Datennetzwerk mit einer Anzahl von Slaves verbunden wird und zwischen dem Master (M) und den Slaves Daten in Form von Datenpaketen versendet werden, wobei eine Mehrzahl von Slaves zu einer Summenrahmengruppe zusammengefasst werden.

In einem Datennetzwerk zur Datenkommunikation ist ein Netzwerkprotokoll implementiert, mit dem Daten in Datenpaketen auf dem Datennetzwerk zwischen den mit dem Datennetzwerk verbundenen Netzwerkknoten übertragen werden. Das heute wohl bekannteste und am weitesten verbreitete Netzwerkprotokoll ist das Ethernet-Protokoll. Ethernet definiert hierzu Datenpakete (auch Datenframe oder Ethernetframe genannt), in denen Daten eines übergeordneten Kommunikationsprotokolls in einem Ethernet-Datenpaket gekapselt übertragen werden können. Hierbei können in einem Ethernet-Datenpaket Daten des Kommunikationsprotokolls mit einer Datenlänge zwischen 46 und 1500 Byte übertragen werden. Die Adressierung im Ethernet-Protokoll erfolgt über die MAC (Media Access Control) Adressen der Netzwerkknoten, die für jedes Netzwerkgerät eindeutig vergeben ist. Ethernet ist aus Sicht des bekannten OSI-Schichtmodells ausschließlich auf den Schichten 1 und 2 implementiert. In den höheren Schichten können verschiedene Kommunikationsprotokolle implementiert sein. Hierbei hat sich eine Vielzahl von Kommunikationsprotokollen etabliert, wie beispielsweise IP auf Schicht 3 oder TCP und UDP auf Schicht 4, um einige weit verbreitete Kommunikationsprotokolle zu nennen.

Hardwaremäßig sind heutige Ethernetsysteme sogenannte geschaltete Datennetzwerke, in denen einzelne Netzwerkknoten nicht direkt miteinander verbunden sein müssen und nicht direkt miteinander kommunizieren können müssen, sondern über Kopplungselemente, sogenannte Netzwerkswitches oder Netzwerkhubs, verbunden sein können. Ein Kopplungselement hat hierzu eine Anzahl von Netzwerkports, an die ein Netzwerkteilnehmer (entweder ein Netzwerknoten oder ein anderes Kopplungselement) angeschlossen werden kann. Ein solches Kopplungselement leitet ein Ethernet-Datenpaket entweder an alle Ports (Hub) oder an (einen) bestimmte(n) Port(s) (Switch) weiter. Damit werden in einem geschalteten Datennetzwerk sogenannte Punkt-zu-Punkt Verbindungen hergestellt, bei denen Ethernet-Datenpakete von einem Netzwerkknoten über eine Anzahl von Kopplungselementen an einen anderen Netzwerkknoten weitergeleitet werden.

Netzwerkknoten, die in der industriellen Automatisierung eingesetzt werden, haben oftmals intern einen 3-Port-Switch verbaut, wobei zwei Ports von außen zugänglich sind und der dritte Port zur internen Verschaltung dient. Damit lassen sich ohne zusätzliche externe Kopp lungselemente Linientopologien realisieren, in denen ein Netzwerkknoten mit dem jeweils nächsten Netzwerkknoten in Form einer Linie verbunden ist, was im industriellen Umfeld hilft, den Verkabelungsaufwand zu reduzieren. Selbstverständlich können aber auch externe Netzwerkswitches oder externe Netzwerkhubs zum Aufbau der Netzwerktopologie eingesetzt werden. Grundsätzlich ist jede Netzwerktopologie möglich, also insbesondere eine Sterntopologie, eine Linientopologie, eine Baumtopologie, eine Ringtopologie, usw. und auch beliebige Kombination daraus. Bei einer Ringtopologie sind bekanntermaßen in der Regel spezielle Vorkehrungen zu treffen, um das unkontrollierte Zirkulieren von Datenpaketen mit Mehrfachadresse zu verhindern.

Um Ethernet auch zur industriellen Automatisierung einsetzen zu können, wurden bereits echtzeitfähige Ethernet-Protokolle entwickelt, da das Standard Ethernet-Netzwerkprotokoll bekanntermaßen nicht echtzeitfähig ist. Beispiele bekannter echtzeitfähiger Ethernet-Netzwerkprotokolle sind Modbus/TCP, Ethernet/IP, ProfiNET IRT, EtherCAT oder Ethernet POWERLINK, um nur einige zu nennen. In diesem Zusammenhang spricht man auch oftmals von Industrial Ethernet. Mit diesen echtzeitfähigen Ethernet-Protokollen soll eine für die jeweilige Anwendung ausreichend schnelle und deterministische Datenkommunikation sichergestellt werden. Es soll damit also insbesondere sichergestellt werden, dass ein echtzeitrelevantes Datenpaket innerhalb einer vorgegebenen Zeitspanne von einem sendenden Netzwerkknoten über das Netzwerk zu einem empfangenden Netzwerkknoten übertragen wird. In einer industriellen Automatisierungsumgebung bedeutet Echtzeitfähigkeit z.B., dass zwischen der Erfassung eines Messwertes, Weiterleitung des Messwertes an eine Regelungseinheit, Berechnung eines Stellwertes in der Regelungseinheit aufgrund des Messwertes und Übertragen des Stellwertes an einen Aktuator zur Durchführung einer Handlung eine fest vorgegebene Zeitspanne einzuhalten ist. Bezogen auf das echtzeitfähige Ethernet-Datennetzwerk zur Übertragung dieser Daten über das echtzeitfähige Ethernet-Datennetzwerk muss dabei die Datenübertragung innerhalb einer vorgegebenen Zeitspanne sichergestellt sein.

In einer industriellen Automatisierungsumgebung gibt es meist zumindest einen Master-Netzwerkknoten (in Folge auch kurz Master), der mit zumindest einem zugeordneten, in der Regel mehreren zugeordneten, Slave-Netzwerkknoten (in Folge auch kurz Slaves) kommuniziert. Zur Realisierung eines echtzeitfähigen Ethernet-Datennetzwerkes haben die bekannten echtzeitfähigen Ethernet-Netzwerkprotokolle einen Sendezyklus mit einer vorgebbaren Zykluszeit definiert, innerhalb der der Master mit jedem Slave kommunizieren kann. Das umfasst normalerweise zyklisch die Möglichkeit eines Datenpakets vom Master an jeden Slave und umgekehrt auch zumindest ein Datenpaket eines Slaves, normalerweise zumindest ein Datenpaket von jedem Slave, an den zugeordneten Master. Die erreichbare und vorab ermittelbare minimale Zykluszeit ergibt sich aus der Summe der maximalen Laufzeiten der Datenpakete. Die Laufzeiten sind hardwareabhängig und ergeben sich aus den Bitübertragungszeiten (Länge, Payload) der Datenpakete, aus der Netzwerkinfrastruktur (z.B. Verzögerungszeiten durch Kopplungselemente) und der Netzwerktopologie. Dabei sind ebenfalls noch die oben genannten Grenzen in der Größe der Ethernet-Datenpakete zu beachten.

Dieser zyklische (isochrone) Datenverkehr, der die Basis der Echtzeitfähigkeit im echtzeitfähigen Ethernet-Netzwerkprotokoll darstellt, wird in der Regel in jedem Sendezyklus durch nicht zyklische (asynchrone) Datenpakete erweitert. Solche asynchronen Datenpakete werden von der nicht den Echtzeitanforderungen unterworfenen Datenkommunikation genutzt, beispielsweise zur Konfiguration der Slaves, zu Visualisierungszwecken oder für Statusabfragen. Für solche asynchronen Datenpakete wird Bandbreite reserviert, d.h., dass in jedem Sendezyklus eine gewisse, definierte Zeit für asynchronen Datenverkehr zur Verfügung steht. In der konkreten Umsetzung des zyklischen und asynchronen Datenverkehrs unterscheiden sich die bekannten echtzeitfähigen Ethernet-Protokolle.

Echtzeitfähige Ethernet-Datennetzwerke werden immer größer, im Sinne immer mehr Netzwerkknoten, die in das Datennetzwerk eingebunden werden. Die im Datennetzwerk verfügbare Bandbreite für die Datenkommunikation muss daher gut geplant werden, um die erreichbaren Übertagungszeiten für Echtzeitanwendungen niedrig zu halten.

Die Bandbreite wird aber auch durch viele sehr kurze Datenpakete belastet. Das kleinste Ethernet Datenpaket enthält 46 Byte Daten. Sind die zu versendenden Nutzdaten kürzer, so müssen die Datenpakete aufgefüllt werden, in der Regel mit Nullen (das sogenannte Frame Padding mit Paddingdaten). In einem echtzeitfähigen Ethernet-Datennetzwerk senden die Slaves (z.B. Sensoren, Ein-/Ausgabegeräte, Geber, usw.) aber oftmals nur wenige Daten (im Sinne von geringer Datenlänge) an den Master (z.B. eine Steuereinheit), womit durch diese kurzen Datenpakete viel Bandbreite am Datennetzwerk verschwendet wird.

Um die verfügbare Bandbreite besser ausnutzen zu können, wurden schon sogenannte Summenrahmen verwenden, in denen Daten für oder von mehreren Netzwerkknoten enthalten sind. Auf diese Weise kann Overhead, und gegebenenfalls Paddingdaten, vieler kleiner Datenpakete eingespart werden, womit die Bandbreite besser ausgenutzt und die Zykluszeit verkürzt werden kann. EtherCAT nutzt beispielsweise ein Summenrahmenverfahren, bei dem der Master ein Datenpaket mit Daten für alle Slaves an den ersten Slave schickt. Dieser liest seine Daten aus dem Datenpaket (Outdaten) aus und überschreibt diese Daten mit Daten, die der Slave an den Master (Inputdaten) senden möchte. Dieses geänderte Datenpaket wird dann an den zweiten Slave gesendet, usw., bis das Datenpaket vom letzten Slave in umgekehrter Reihenfolge wieder an den Master gesendet wird. Der Nachteil daran ist, dass die reservierten Daten im Summenrahmen pro Slave immer so groß sein müssen wie das Maximum aus Input- und Outputdaten jedes Slaves, was die verfügbare Bandbreite reduziert. Weiters braucht EtherCAT eigene Bausteine (ASICs) in den Netzwerkknoten, da dieses Verfahren mit Standard Ethernet Hardware nicht funktioniert. In einer anderen bekannten Implementierung des Summenrahmenverfahrens wird das Datenpaket von Master in Richtung der Slaves verkürzt, indem jeder Slave seine Daten aus dem Datenpaket entnimmt und in umgekehrter Richtung verlängert, indem jeder Slave seine Daten an das Datenpaket an den Master hinzufügt. Ein Nachteil eines solchen Summenrahmenverfahrens ist, dass das Datenpaket an jeder Stelle im Datennetzwerk unterschiedlich lang ist und damit das Datennetzwerk schwer zu diagnostizieren ist. Abgesehen davon müssen auch hier zur Realisierung eigene Bausteine in den Netzwerkknoten eingesetzt werden. Ein solches Summenrahmenverfahren wird von ProfiNET IRT unterstützt (Dynamic Frame Packing). POWERLINK versendet ein Datenpaket vom Master als Summenrahmen an alle Slaves und der Master bekommt von jedem Slave ein separates Ethernet-Datenpaket retour. Dieses Verfahren kann mit Standard Ethernet-Hardware realisiert werden, weil der Summenrahmen einmal im Master erzeugt wird und danach von keinen anderen Netzwerknoten mehr verändert wird. Die bekannten Verfahren basieren aber alle darauf, dass der Master die Datenkommunikation anstößt.

Mit diesen Verfahren konnte schon eine Verbesserung der Ausnutzung der verfügbaren Bandbreite am echtzeitfähigen Ethernet-Datennetzwerk erzielt werden. D.h. es konnte erreicht werden, dass mehr Daten pro Zeiteinheit versendet werden können, bzw. dass die Zykluszeiten der Sendezyklen verkürzt werden konnte.

Die DE 10 2008 018 633 A1 zeigt ein Verfahren, bei welchem ein Buskoppler über eine erste Schnittstelle mit einem Netzwerk und über eine zweite Schnittstelle mit Busteilnehmern eines unterlagerten Bussystems kommuniziert.

Es ist eine Aufgabe der gegenständlichen Erfindung, ein Verfahren anzugeben, mit dem mit geringem Aufwand die Zykluszeit der Sendezyklen in einem echtzeitfähigen Ethernet Datennetzwerk verkürzt werden kann.

Diese Aufgabe wird erfindungsgemäß dadurch gelöst, dass ein Slave der Summenrahmengruppe als Sammelknoten festgelegt wird und alle anderen Slaves der Summenrahmengruppe ihre Daten mit Sammel-Datenpaketen an den Sammelknoten senden, der Sammelknoten die Daten der anderen Slaves der Summenrahmengruppe in ein Summenrahmen-Datenpaket einfügt und der Sammelknoten das Summenrahmen-Datenpaket an den Master sendet. Dieses Summenrahmenverfahren muss nicht vom Master angestoßen werden, indem einen Summenrahmen vom Master an die Slaves gesendet wird, wobei die Slaves diesen Summenrahmen auf irgendeine Weise bearbeiten. Durch dieses Summenrahmenverfahren können die an den Sammelknoten sendenden Slaves daher als herkömmliche Ethernet-Netzwerkknoten ohne zusätzliche Funktionalität ausgeführt werden. Lediglich der

Sammelknoten muss die zusätzliche Funktionalität des Sammelns der Sammel-Datenpakete und des Erstellens und Versenden des Summenrahmen-Datenpakets an den Master M implementiert haben. Auf diese Weise kann der Aufwand zur Implementierung des Summenrahmenverfahrens deutlich reduziert und es können dabei trotzdem kurze Zykluszeiten erreicht werden.

Ganz besonders vorteilhaft ist es, wenn als Sammelknoten der Slave der Summenrahmengruppe ausgewählt wird, der im Datennetzwerk am weitesten vom Master entfernt ist. Damit kann der Umstand ausgenutzt werden, dass in einem üblichen echtzeitfähigen Ethernet Datennetzwerk weniger Daten vom Master an die Slaves gesendet werden als umgekehrt. Die Senderichtung, in der weniger Datenverkehr stattfindet, wird somit ausgenutzt, um die Sammel-Datenpakete zu versenden, was das Datennetzwerk nicht belastet. Die Daten können dann mit den Vorteilen des Summenrahmens als Summenrahmen in Richtung des Masters gesendet werden.

Alternativ kann als Sammelknoten der Slave der Summenrahmengruppe ausgewählt wird, der am Datennetzwerk am nähersten zum Master angeordnet ist. Auf diese Weise können die weiter vom Master entfernten Netzwerkknoten mit einer geringeren Datenrate senden, als der Sammelknoten, wodurch Netzwerkknoten mit unterschiedlichen Datenraten eingesetzt werden können.

Wenn als Sammelknoten ein Slave in der Mitte der Summenrahmengruppe ausgewählt wird, können beide Vorteile genutzt werden.

Die gegenständliche Erfindung wird nachfolgend unter Bezugnahme auf die Figuren 1 bis 8 näher erläutert, die beispielhaft, schematisch und nicht einschränkend vorteilhafte Ausgestaltungen der Erfindung zeigen. Dabei zeigt
Fig.1 und 2 die Kommunikation auf einem echtzeitfähigen Ethernet-Datennetzwerk,
Fig.3 und 4 eine erste Umsetzung des erfindungsgemäßen Summenrahmenverfahrens,
Fig.5 und 6 eine weitere Umsetzung des erfindungsgemäßen Summenrahmenverfahrens und
Fig.7 und 8 eine weitere Umsetzung des erfindungsgemäßen Summenrahmenverfahrens.

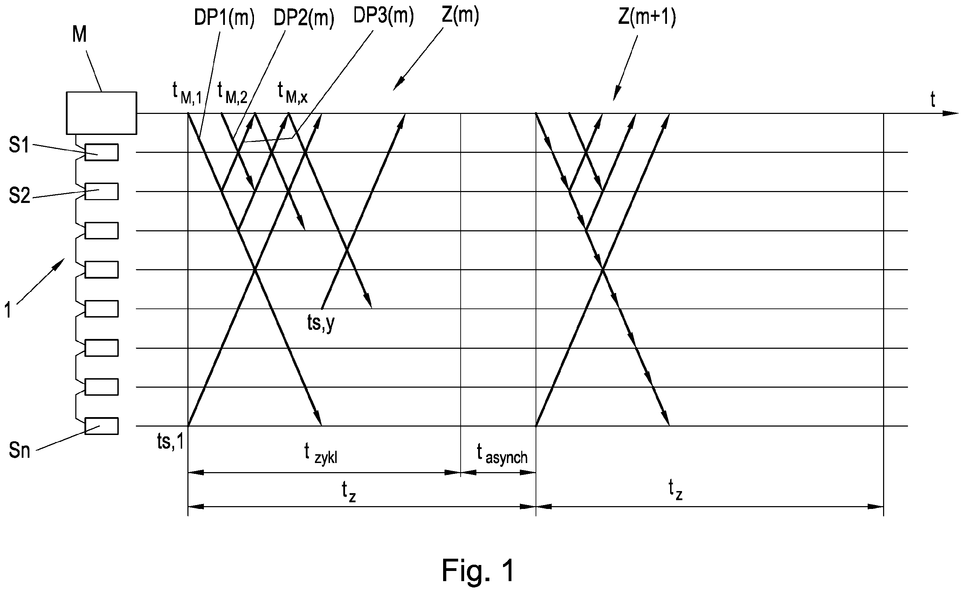

Ein mögliches, der Erfindung zugrunde liegendes, echtzeitfähiges Ethernet-Netzwerkprotokoll wird anhand der Fig.1 erläutert, wobei natürlich auch andere echtzeitfähige Ethernet-Netzwerkprotokolle verwendet werden könnten. Zur Beschreibung wird eine beispielhafte Netzwerktopologie in Form einer Linientopologie herangezogen, in der Netzwerkknoten, hier ein Master M mit einer Reihe von in Serie geschalteten Slaves S1 ... Sn, zu einem Netzwerk verbunden sind. Die Slaves S1 ... Sn sind hier als Netzwerkgeräte mit integriertem 3-Port Switch (Kopplungselement) ausgeführt, was eine solche Linientopologie ohne externe Kopplungselemente ermöglicht. Der Master M kann in jedem Sendezyklus Z, mit vorgegebener Zykluszeit t_{Z}, mit jedem Slave S1 ... Sn kommunizieren, indem am Ethernet-Datennetzwerk 1 Ethernet-Datenpakete DP (in weitere Folge einfach auch als Datenpakete DP bezeichnet) versendet werden. Ein versandtes Datenpaket DP ist in Fig.1 als Pfeil angedeutet, wobei die Pfeilspitze die Senderichtung (also von Master M zu einem Slave S oder umgekehrt) angibt. Jede waagrechte Linie ist einem Netzwerkknoten (Master M oder Slaves S1 ... Sn) zugeordnet und stellt einen Zeitstrahl dar. Die netzwerkbedingte Latenz beim Übertragen der Datenpakete DP über das Ethernet-Datennetzwerk 1 wird durch die schrägen Pfeile angedeutet, wobei die Verarbeitungsdauer der Datenpakete DP in den Kopplungselementen und die Latenz durch die endliche Ausbreitungsgeschwindigkeit im Medium (Kupferkabel, Lichtwellenleiter) zusammengefasst und vereinfacht als konstant angenommen werden.

Ein Sendezyklus Z(m) ist zeitlich genau eingeteilt, indem die Zeitpunkte t_{M,1}, t_{M,2}, ..., t_{M,x}, t_{S,1}, ..., t_{S,y} festgelegt sind, zu denen jeder Netzwerkknoten, der Master M oder die Slaves S1 ... Sn, Datenpakete DP versenden darf. Damit können durch die Planung der Zeitpunkte Datenkollisionen am Ethernet-Datennetzwerk 1 vermieden werden. Nachdem Ethernet eine Vollduplex-Datenkommunikation erlaubt, können aber auf einem Netzwerkabschnitt gleichzeitig Datenpakte DP in beiden Richtungen unterwegs sein. Damit weiß jeder der beteiligten Netzwerkknoten (Master M, Slaves S), zu welcher Zeit innerhalb eines Sendezyklus Z er Datenpakete DP versenden darf, und wann er welche empfangen soll.

Diese Zeitpunkte t_{M,1}, t_{M,2}, ..., t_{M,x}, t_{S,1}, ..., t_{S,y} innerhalb des Sendezyklus Z können vorab sehr genau geplant werden, wenn bekannt ist, wie viele Daten (Byte) in jedem Datenpakte DP übertragen werden. Je größer das zu erwartende Datenpaket DP ist, umso weiter auseinander sind die Zeitunkte t_{M,1}, t_{M,2}, ..., t_{M,x}, t_{S,1}, ..., t_{S,y}. Ist die Datengröße vorab nicht bekannt, dann kann von einer maximalen Datengröße, z.B. der maximalen Framegröße eines Ethernetframes, ausgegangen werden. Zwischen zwei Datenpaketen DP ist am Datennetzwerk 1 auch jeweils eine vorgegebene Pause einzuhalten.

Die Anzahl der Netzwerkknoten, Master M und Slaves S1 ... Sn, und die Größe der versendeten Daten ist damit auch mitbestimmend für die erzielbare Zykluszeit t_{Z}.

In Fig.1 sendet der Master M im Sendezyklus Z(m) zum Zeitpunkt t_{M,1} ein Datenpaket DP1(m) an den letzten Slave Sn. Dieses Datenpaket DP1(m) könnte aber auch ein Summenrahmen sein, der Daten für alle Slaves S1 ... Sn enthält (angedeutet im Sendzyklus Z(m+1)) und von dem die Slaves S1 ... Sn ihre Daten lesen. Zu einem festgelegten Zeitpunkt t_{M,2} danach sendet der Master M das nächste Datenpaket DP2(m), hier z.B. an den Slave S2. Zum selben Zeitpunkt kann der Slave S2 auch ein Datenpaket DP3(m) an den Master M senden. Dieses Prinzip wird auch von den restlichen Netzwerkknoten eingehalten, wobei nicht jeder Slave S1 ... Sn ein Datenpaket DP erhalten oder senden muss. Die Kommunikation ist durch die Vorgabe der Zeitpunkte t_{M,1}, t_{M,2}, ..., t_{M,x}, t_{S,1}, ..., t_{S,y} aber vorteilhaft so geplant, dass die Datenpakete DP von den Slaves S1 ... Sn am Master M hintereinander und ohne zeitliche Lücke (abgesehen von einer einzuhaltenden Pause) eintreffen. Dieser Kommunikationsablauf wiederholt sich dann in den nachfolgenden Sendezyklen Z(m+i), wobei nicht in jedem Sendezyklus Z auch immer die gleichen Netzwerkknoten Datenpakte DP senden oder empfangen müssen, wie in Fig.1 angedeutet.

Diese geplante Datenkommunikation findet zyklisch statt und es ist in jedem Sendezyklus Z ein zeitlicher Abschnitt t_{zykl} für diesen isochronen Datenverkehr vorgesehen. In jedem Sendezyklus Z ist aber auch ein Abschnitt t_{asynch} für asynchronen Datenverkehr reserviert, in dem Ethernet-Datenkommunikation stattfindet, die keine harten Echtzeitanforderungen erfüllen muss.

Wenn sich die zyklische Kommunikation von Sendezyklus zu Sendezyklus unterscheidet (wie in Fig. 1 zwischen Z(m) und Z(m+1) beispielhaft angedeutet), dann gibt es zumindest eine maximale Periodendauer (a Sendezyklen), innerhalb derer sich die Sendemuster exakt wiederholen, d. h. die zyklischen Datenpakete in Z(m) sind gleich denen in Z(m+a). In jedem einzelnen Sendezyklus Z kann sich aber das Verhältnis zwischen t_{zykl} und t_{asynch} ändern, je nach Anzahl der geplanten zyklischen Datenpakete.

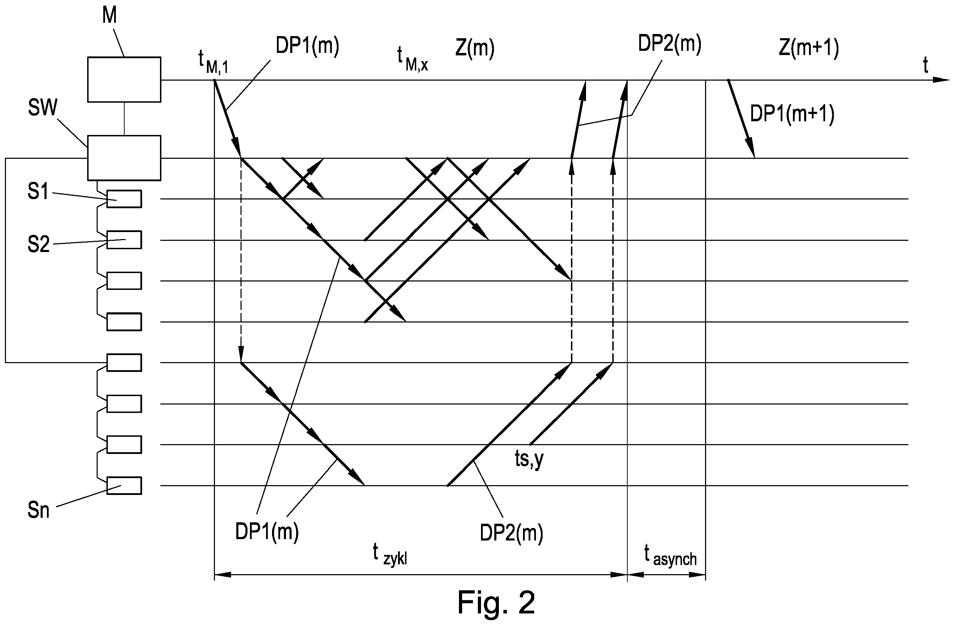

Dieses Kommunikationsprinzip gilt natürlich auch in anderen Netzwerktopologien, wie anhand von Fig.2 am Beispiel einer Sterntopologie beschrieben wird. Hier ist mittels eines externen Netzwerkswitches SW eine Sterntopologie aufgebaut, wobei in jedem Zweig eine Linientopologie, wie in der Fig.1 beschrieben, realisiert ist. Der Master M ist ebenfalls mit dem Netzwerkswitch SW verbunden. Im gezeigten Beispiel wird zum Zeitpunkt t_{M,1} zu Beginn jedes Sendezyklus Z ein Datenpaket DP1(m) in Form eines Summenrahmens an alle Slaves S1 ... Sn gesendet. Dieses Datenpaket DP1(m) wird vom Netzwerkswitch SW in die beiden Zweige weitergeleitet und dort an alle Slaves S1 ... Sn gesendet. Die anderen Datenpakete DP werden dann wieder zu den dafür vorgesehenen Zeitpunkten t_{M,x}, t_{S,y} innerhalb des Sendezyklus Z(m) versendet. Hier ist allerdings zu bedenken, dass die Datenpakete DP, die von den Slaves S1 ... Sn an den Master M zurückgesendet werden, vorzugsweise so zu planen sind, dass im Master M und im dazwischenliegenden Netzwerkswitch SW keine Datenstaus entstehen können. Der Zeitpunkt des Datenpaketes DP2(m) vom Slave Sn an den Master M ist z.B. so geplant, dass dieses Datenpaket DP2(m) nicht mit anderen Datenpaketen aus dem anderen Zweig der Sterntopologie kollidiert, wie in Fig.2 dargestellt. Die zwischen Master M und Netzwerkswitch SW hin- und hergehenden Datenpakete DP sind zwecks Übersichtlichkeit in Fig.2 nur teilweise dargestellt.

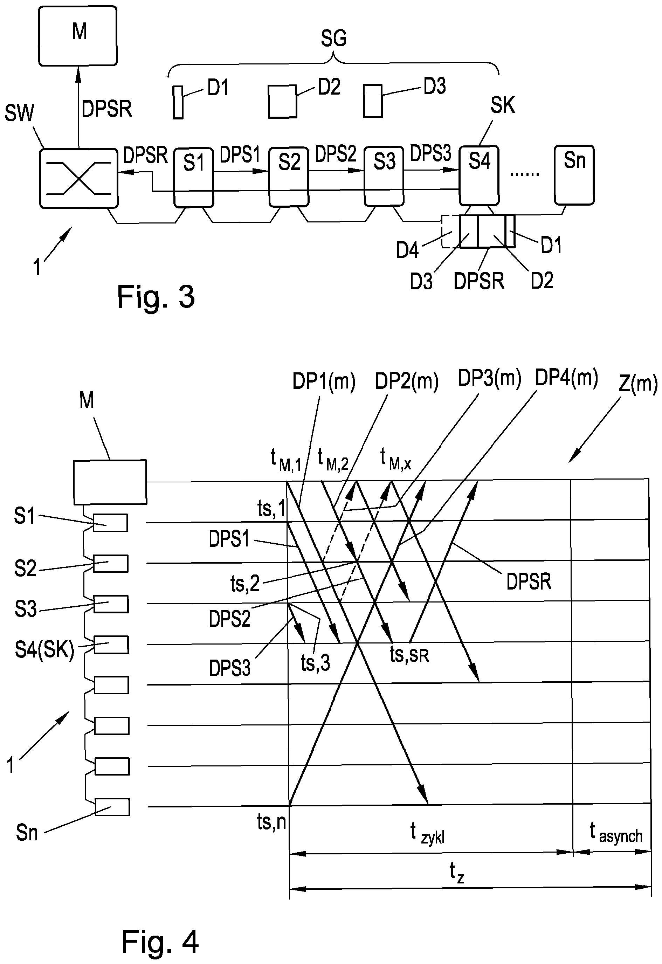

Das erfindungsgemäße Verfahren zur Datenkommunikation in einem echtzeitfähigen Ethernet-Datennetzwerk wird nun anhand der Fig.3 erläutert. Das echtzeitfähige Ethernet-Datennetzwerk 1 besteht hier aus einem Master M Netzwerkknoten, einem Netzwerkswitch SW und einer Anzahl von Slave S1, ..., Sn Netzwerkknoten. Der Netzwerkswitch SW könnte natürlich auch entfallen und der Master M könnte direkt mit dem ersten Slave S1 verbunden sein. Eine Anzahl der Slaves S1, ..., Sn, hier die Slaves S1, S2, S3, S4, werden zur Umsetzung des erfindungsgemäßen Summenrahmenverfahrens logisch zu einer Summenrahmengruppe SG zusammengefasst.

Ein beliebiger Slave S4 der Summenrahmengruppe SG wird als Sammelknoten SK definiert. Alle anderen Slaves S1, S2, S3 der Summenrahmengruppe SG senden ihre Daten D1, D2, D3, die sie an den Master M senden wollen, in Sammel-Datenpaketen DPS1, DPS2, DPS3 an den Sammelknoten SK. Die an den Sammelknoten SK sendenden Slaves S1, S2, S3 der Summenrahmengruppe SG müssen dazu lediglich entsprechend konfiguriert werden, sodass die Daten nicht an den Master M, sondern an den Sammelknoten SK gesendet werden. Dazu müssen lediglich die Adresseinträge in den Slaves S1, S2, S3 in den Adresstabellen entsprechend konfiguriert werden. Die Sammel-Datenpakete DPS1, DPS2, DPS3 entsprechen damit den Datenpaketen, die normalerweise von den Slaves S1, S2, S3 an den Master M gesendet werden würden. Diese Slaves S1, S2, S3 der Summenrahmengruppe SG können damit einfache Standard Ethernet Netzwerkknoten sein. Nur im Sammelknoten SK muss die zusätzliche Funktionalität des Sammelns der Sammel-Datenpakete DPS1, DPS2, DPS3 und des Erstellens und Versenden des Summenrahmen-Datenpakets DPSR an den Master M implementiert sein.

Der Sammelknoten SK sammelt diese Daten D1, D2, D3, die dieser mit den Sammel-Datenpaketen DPS1, DPS2, DPS3 erhält, und fügt diese in ein Summenrahmen-Datenpaket DPSR ein, bzw. erzeugt daraus ein Summenrahmen-Datenpaket DPSR. Der Sammelknoten SK kann auch noch eigene Daten D4 in das Summenrahmen-Datenpaket DPSR einfügen, wie in Fig.3 angedeutet. Der Sammelknoten SK sendet dann das fertige Summenrahmen-Datenpaket DPSR über das Datennetzwerk 1 an den Master M.

Die bekannten Overhead Daten eines Ethernet Datenpakets wie dem Summenrahmen-Datenpaket DPSR, und gegebenenfalls notwendige Paddingdaten der kurzen Datenpakete D1, D2, D3, sind in Fig.3 der Einfachheit nicht dargestellt. Die Overhead Daten, und gegebenenfalls Daten durch Frame Padding, eines Ethernet Datenpakets sind aber viel weniger, als die Overhead Daten vieler einzelner Datenpaketen von den Slaves S1, S2, S3, S4 an den Master M. Da nunmehr nur einmal die Overhead Daten für das Summenrahmen-Datenpaket DPSR versendet werden müssen, kann auch die Zykluszeit t_{z} der Sendezyklen reduziert werden, da in Summe weniger Daten in Richtung Master M versendet werden.

Im Ausführungsbeispiel nach Fig.3 ist der Sammelknoten SK weiter vom Master M entfernt als die anderen Slaves S1, S2, S3 der Summenrahmengruppe SG. Damit erreicht das Summenrahmen-Datenpaket DPSR beim Senden an den Master M auch alle anderen Slaves S1, S2, S3 der Summenrahmengruppe SG. Das hat den Vorteil, dass auf diese Weise gleichzeitig direkter Querverkehr zwischen zwei Slaves S1, S2, S3, S4 der Summenrahmengruppe realisiert werden kann, da das erstellte Summenrahmen-Datenpaket DPSR am Weg zum Master M durch alle Slaves S1, S2, S3 der Summenrahmengruppe SG durchgeleitet wird. D.h., dass auf diese Weise zwei (oder auch mehr) Slaves S1, S2, S3, S4 direkt Daten miteinander austauschen können.

Die Anordnung des Sammelknotens SK möglichst weit vom Master entfernt, vorzugsweise am weitesten vom Master M entfernt, hat insbesondere in einer Linientopologie wie in Fig.3 dargestellt Vorteile. In üblichen echtzeitfähigen Ethernet-Netzwerkprotokollen ist der Datenverkehr vom Master M an die Slaves Sx geringer, als von den Slaves Sx an den Master M. Wenn man den Sammelknoten SK in der Nähe des Masters M anordnet, dann belegen die Sammel-Datenpaket DPSx von den Slaves Sx (mit den jeweiligen Overheaddaten) das Datennetzwerk und man hätte durch das Summenrahmen-Datenpaket DPSR keinen oder wenig Gewinn. Je näher der Sammelknoten SK am Master M ist, umso weniger Gewinn kann erwartet werden. Ist der Sammelknoten SK hingegen weiter vom Master M entfernt, als die (oder zumindest einiger der) Slaves S1, S2, S3 der Summenrahmengruppe SG, dann kann die höhere verfügbare Bandbreite vom Master M in Richtung der Slaves Sx ausgenutzt werden, um darin die Sammel-Datenpakete DPS1, DPS2, DPS3 zu senden. Man "verschenkt" also in Richtung vom Master M an die Slaves Sx Bandbreite, die man in der Regel ohnehin nicht braucht, um in Richtung von den Slaves Sx an den Master M Zykluszeit zu sparen.

In Fig.4 ist der Datenpaketverkehr über das Datennetzwerk 1 nochmals dargestellt (der Einfachheit halber ohne Netzwerkswitch SW). Wie bereits beschrieben ist der Datenverkehr auf dem echtzeitfähigen Ethernet-Datennetzwerk 1 zeitlich genau geplant. Damit müssen die Sammel-Datenpaket DPS1, DPS2, DPS3 ebenfalls zeitlich genau geplant werden und neben dem herkömmlichen Datenverkehr durchgeführt werden. Zu den Zeitpunkten t_{S,1}, t_{S,2}, t_{S,3}, eines Sendezyklus Z(m) ist vorgesehen, dass Slaves S1, S2, S3 der Summenrahmengruppe SG ihre Daten D1, D2, D3 an den Sammelknoten SK senden. Zum Zeitpunkt T_{S,SR}, nachdem der Sammelknoten SK alle erwarteten Daten D1, D2, D3 erhalten hat und nachdem der Sammelknoten SK das Summenrahmen-Datenpaket DPSR erstellt hat, sendet der Sammelknoten SK das Summenrahmen-Datenpaket DPSR an den Master M.

Die direkte Datenkommunikation eines Slaves S2, S3 der Summenrahmengruppe SG an den Master M über eine direkte Adressierung kann mit dem Summenrahmen-Datenpaket DPSR auch überflüssig werden. Die Datenpakete DP3 und DP4 der Slaves S2, S3 könnten damit eingespart werden, wie in Fig.4 strichliert angedeutet.

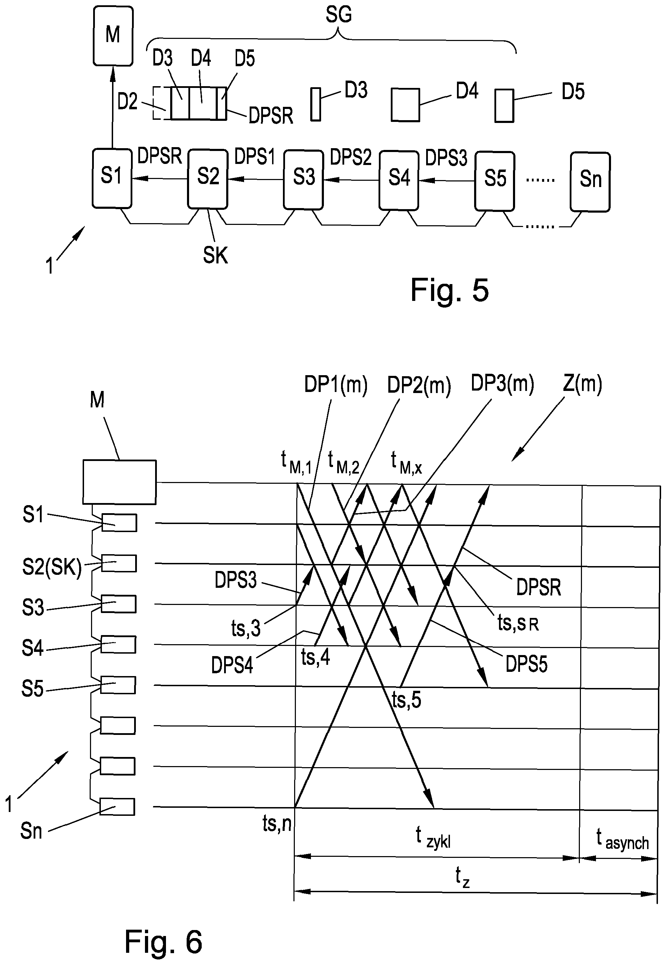

Mit Fig.5 und 6 ist ein anderes Ausführungsbeispiel der Erfindung dargestellt. Hier ist der Sammelknoten SK der Slave S2 der Summenrahmengruppe SG, der dem Master M im Datennetzwerk 1 am nächsten ist. Der Sammelknoten SK erhält von den dahinter liegenden (also vom Master M weiter entfernten) Slaves S3, S4, S5 der Summenrahmengruppe SG die Sammel-Datenpakete DPS3, DPS4, DPS5 der Slaves S3, S4, S5, die wieder zu den vorgegebenen Zeitpunkten t_{S,3}, t_{S,4}, t_{S,5}, eines Sendezyklus Z(m) (Fig.6) abgesendet werden. Zum Zeitpunkt T_{S,SR}, nachdem der Sammelknoten SK alle erwarteten Daten D3, D4, D5 erhalten hat und nachdem der Sammelknoten SK das Summenrahmen-Datenpaket DPSR erstellt hat (eventuell mit eigenen Daten D2), sendet der Sammelknoten SK das Summenrahmen-Datenpaket DPSR an den Master M. Obwohl man dabei den oben beschriebenen Vorteil des Summenrahmen-Datenpakets DPSR abschwächt, hat diese Anordnung einen anderen Vorteil, nämlich dass man damit auch mit unterschiedlichen Datenraten der Slaves S1, S2, S3, S4 der Summenrahmengruppe SG umgehen kann. Die aus Sicht des Masters M hinter dem Sammelknoten SK liegenden Slaves S3, S4, S5 können eine niedrigere Datenrate (z.B. 100 Mbit) haben, als der Sammelknoten SK (z.B. 1 GBit). Der schnelle Sammelknoten SK kann dann das Summenrahmen-Datenpaket DPSR mit der hohen Datenrate über das Datennetzwerk übertragen (z. B. in einer Baumtopologie).

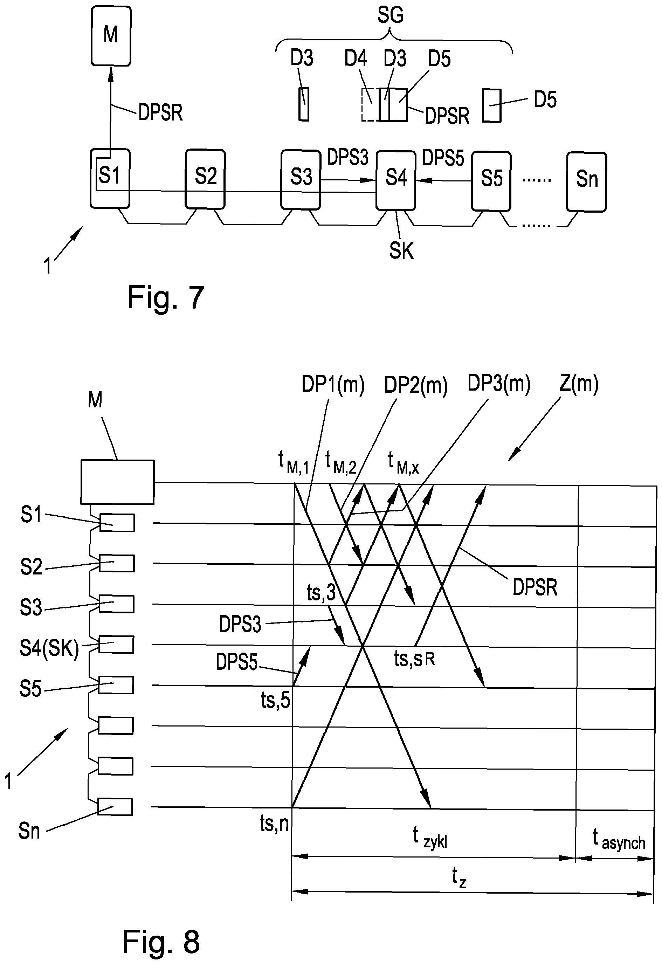

In einer weiteren Ausgestaltung der Erfindung nach den Fig.7 und 8 ist wieder eine Summenrahmengruppe SG bestehend aus einer Mehrzahl von Slaves S3, S4, S5 vorgesehen, wobei hier der Sammelknoten SK (Slave S4) irgendwo in der Mitte der Slaves S3, S4, S5 der Summenrahmengruppe SG angeordnet ist. Dadurch erhält der Sammelknoten SK Sammel-Datenpaket DPS3, DPS5 von beiden Seiten aus dem Datennetzwerk 1. Ansonsten ist der Ablauf genau gleich. Zum Zeitpunkt T_{S,SR} (Fig.8), nachdem der Sammelknoten SK alle erwarteten Daten D3, D5 erhalten hat und nachdem der Sammelknoten SK das Summenrahmen-Datenpaket DPSR erstellt hat (eventuell mit eigenen Daten D4), sendet der Sammelknoten SK das Summenrahmen-Datenpaket DPSR an den Master M.

Es ist anzumerken, dass die Slaves S1, S2, S3, S4, S5 einer Summenrahmengruppe SG am Datennetzwerk 1 nicht unmittelbar hintereinander oder in einer Reihe angeordnet sein müssen, wie in den gezeigten Ausführungsbeispielen.

Grundsätzlich wäre es sogar möglich, das Senden eines Summenrahmen-Datenpaket DPSR auch über mehrere Sendezyklen t_{z} zu verteilen. Der Sammelknoten Sk kann dazu über mehrere Sendezyklen t_{z} die Sammel-Datenpakete DPS1, DPS2, DPS3 sammeln und nach Eingang aller Sammel-Datenpakete DPS1, DPS2, DPS3 das Summenrahmen-Datenpaket DPSR versenden.

Dass das Summenrahmen-Datenpaket DPSR nur an einer Stelle (im Sammelknoten SK) erstellt wird und dann unverändert über das Datennetzwerk 1 gesendet wird, hat aber noch einen anderen Vorteil. Ein Ethernet Datenpaket ist in der Regel durch Redundanzdaten, wie beispielsweise ein Cyclic Reduncancy Code (CRC), gegen Übertragungsfehler gesichert. Würde das Summenrahmen-Datenpaket DPSR während des Übertragens von verschiedenen Netzwerkknoten verändert werden, weil beispielsweise Netzwerkknoten Daten entnehmen oder hinzufügen, dann müsste jeder Netzwerkknoten das versendete Datenpaket eigens mit Redundanzdaten absichern, da ansonsten auf Empfängerseite nicht festgestellt werden könnte, welche Daten korrumpiert wurden. Der Grund dafür ist, dass jeder Netzwerkknoten vor dem Versenden eines Datenpakets DP automatisch neue Ethernet-Redundanzdaten berechnet und in das Ethernet-Datenpaket einfügt. Selbst wenn jetzt ein Bit umfällt und die Ethernet-Redundanzdaten an einer Stelle nicht stimmen, werden diese vom nächsten Netzwerkknoten richtig gerechnet und überschrieben und danach ist nicht mehr feststellbar, dass das Datenpaket DP eigentlich kaputt ist. Der Fehler kann im Header oder in den Daten sein, was nicht festgestellt werden kann. Als Folge müsste das ganze Summenrahmen-Datenpaket DPSR verworfen werden und das erneute Versenden des Summenrahmen-Datenpakets DPSR initiiert werden. Abgesehen davon kostet das auch Rechenleistung und Platz im Summenrahmen. Das wäre insbesondere in einem echtzeitfähigen Ethernet-Netzwerkprotokoll ein Problem, bzw. sogar unzulässig, weil die notwendigen Zykluszeiten nicht mehr eingehalten werden könnten. Beim erfindungsgemäßen Summenrahmenverfahren mit Sammelknoten SK reicht es aus, pro Slave S1, S2, S3, S4 der Summenrahmengruppe SG ein zusätzliches Bit in das Summenrahmen-Datenpaket DPSR aufzunehmen, das anzeigt, ob die Daten D1, D2, D3, D4 beim Sammelknoten SK angekommen sind und gültig sind. Dadurch kann der zusätzliche Overhead im Summenrahmen-Datenpaket DPSR sehr klein gehalten werden. Der Sammelknoten SK erstellt das Summenrahmen-Datenpaket DPSR und berechnet für dieses Ethernet-Datenpaket die Ethernet-Redundanzdaten. Der Master M kann die Ethernet-Redundanzdaten und die zusätzlichen Bits prüfen. Wenn alles passt, kann der Master M von einem korrekten, fehlerfreien Summenrahmen-Datenpaket DPSR ausgehen. Stimmen die Ethernet-Redundanzdaten nicht, muss das Summenrahmen-Datenpaket DPSR verworfen werden. Wenn ein zusätzliches Bit für einen Slave S1, S2, S3, S4 nicht gesetzt ist, kann der Master M bei korrekten Ethernet-Redundanzdaten die Daten aller anderen Slaves verwenden, nur von dem einen Slave, für den das zusätzliche Bit nicht gesetzt ist, nicht.

## Patentansprüche

1. Verfahren zur Datenkommunikation in einem echtzeitfähigen Ethernet-Datennetzwerk (1), in dem zumindest ein Master (M) über das Ethernet-Datennetzwerk (1) mit einer Anzahl von Slaves (S1, ..., Sn) verbunden wird und zwischen dem Master (M) und den Slaves (S1, ..., Sn) Daten in Form von Datenpaketen (DP) versendet werden, wobei eine Mehrzahl von Slaves (S1, S2, S3, S4, S5) zu einer Summenrahmengruppe (SG) zusammengefasst werden **dadurch gekennzeichnet, dass** ein Slave (S2, S4) der Summenrahmengruppe (SG) als Sammelknoten (SK) festgelegt wird und alle anderen Slaves (S1, S2, S3, S4, S5) der Summenrahmengruppe (SK) ihre Daten jeweils mit einem Sammel-Datenpaket (DPS1, DPS2, DPS3, DPS4, DPS5) an den Sammelknoten (SK) senden, **dass** der Sammelknoten (SK) die Daten der anderen Slaves (S1, S2, S3, S4, S5) der Summenrahmengruppe (SG) in ein Summenrahmen-Datenpaket (DPSR) einfügt **und dass** der Sammelknoten (SK) das Summenrahmen-Datenpaket (DPSR) an den Master (M) sendet.

2. Verfahren nach Anspruch 1, **dadurch gekennzeichnet, dass** als Sammelknoten (SK) der Slave (S4) der Summenrahmengruppe (SG) ausgewählt wird, der am Datennetzwerk (1) am weitesten vom Master (M) entfernt ist.

3. Verfahren nach Anspruch 1, **dadurch gekennzeichnet, dass** als Sammelknoten (SK) der Slave (S2) der Summenrahmengruppe (SG) ausgewählt wird, der am Datennetzwerk (1) am nähersten zum Master (M) angeordnet ist.

4. Verfahren nach Anspruch 1, **dadurch gekennzeichnet, dass** als Sammelknoten (SK) ein Slave (S3) in der Mitte der Summenrahmengruppe (SG) ausgewählt wird.

5. Verfahren nach einem der Ansprüche 1 bis 4, **dadurch gekennzeichnet, dass** im Summenrahmen-Datenpaket (DPSR) für jeden an den Sammelknoten (SK) sendenden Slave (S1, S2, S3, S4, S5) der Summenrahmengruppe (SG) ein Bit enthalten ist, das anzeigt, ob die Daten vom Sammelknoten (SK) gültig empfangen wurden.

## Claims

1. A method for data communication in a real-time capable Ethernet data network (1), in which at least one master (M) is connected by means of the Ethernet data network (1) to a plurality of slaves (S1, ..., Sn) and data in the form of data packets (DP) are transmitted between the master (M) and the slaves (S1, ..., Sn), wherein a plurality of slaves (S1, S2, S3, S4, S5) is combined into a sum frame group (SG), **characterized in that** a slave (S2, S4) of the sum frame group (SG) is specified as collector node (SK) and all other slaves (S1, S2, S3, S4, S5) of the sum frame group (SK) transmit their data in each case with a collective data packet (DPS1, DPS2, DPS3, DPS4, DPS5) to the collector node (SK) transmit, **in that** the collector node (SK) inserts the data of the other slaves (S1, S2, S3, S4, S5) of the sum frame group (SG) into a sum frame data packet (DPSR) **and in that** the collector node (SK) transmits the sum frame data packet (DPSR) to the master (M).

2. The method according to claim 1, **characterized in that** the slave (S4) of the sum frame group (SG) which is furthest away from the master (M) on the data network (1) is selected as collector node (SK).

3. The method according to claim 1, **characterized in that** the slave (S2) of the sum frame group (SG) which is arranged nearest to the master (M) on the data network (1) is selected as collector node (SK).

4. The method according to claim 1, **characterized in that** a slave (S3) in the middle of the sum frame group (SG) is selected as collector node (SK).

5. The method according to one of claims 1 to 4, **characterized in that** for each slave (S1, S2, S3, S4, S5) of the sum frame group (SG) transmitting to the collector node (SK) a bit which indicates whether the data have been validly received from the collector node (SK) is contained in the sum frame data packet (DPSR).

## Revendications

1. Procédé de communication de données dans un réseau de données Ethernet (1) en temps réel, dans lequel au moins un maître (M) est relié à un certain nombre d'esclaves (S1, ..., Sn) par le biais du réseau de données Ethernet (1) et des données sont envoyées entre le maître (M) et les esclaves (S1, ..., Sn) sous la forme de paquets de données (DP), une pluralité d'esclaves (S1, S2, S3, S4, S5) étant rassemblés en un groupe de trames de somme (SG), **caractérisé en ce qu'**un esclave (S2, S4) du groupe de trames de somme (SG) est défini comme noeud de collecte (SK) et tous les autres esclaves (S1, S2, S3, S4, S5) du groupe de trames de somme (SK) envoient leurs données à chaque fois avec un paquet de données de collecte (DPS1, DPS2, DPS3, DPS4, DPS5) au noeud de collecte (SK), **en ce que** le noeud de collecte (SK) insère les données des autres esclaves (S1, S2, S3. S4, S5) du groupe de trames de somme dans un paquet de données de trame de somme (DPSR) et **en ce que** le noeud de collecte (SK) envoie le paquet de données de trame de somme (DPSR) au maître (M).

2. Procédé selon la revendication 1, **caractérisé en ce que** l'on choisit comme noeud de collecte (SK) l'esclave (S4) du groupe de trames de somme (SG) qui est le plus éloigné du maître (M) sur le réseau de données (1).

3. Procédé selon la revendication 1, **caractérisé en ce que** l'on choisit comme noeud de collecte {SK) l'esclave (S2) du groupe de trames de somme (SG) qui est le plus proche du maître (M) sur le réseau de données (1).

4. Procédé selon la revendication 1, **caractérisé en ce que** l'on choisit comme noeud de collecte (SK) un esclave (S3) situé au milieu du groupe de trames de somme (SG).

5. Procédé selon l'une des revendications 1 à 4, **caractérisé en ce que**, pour chaque esclave (S1, S2, S3, S4, S5) du groupe de trames de somme (SG) effectuant des envois aux noeuds de collecte (SK), le paquet de données de trames de somme (DPSR) contient un bit qui indique si les données ont bien été reçues par le noeud de collecte (SK).
